# EUROPÄISCHE PATENTSCHRIFT

(11) **EP 0 537 425 B1**
(45) Veröffentlichungstag und Bekanntmachung des Hinweises auf die Patenterteilung: **07.12.1994**
(21) Anmeldenummer: 92112718.9
(22) Anmeldetag: 24.07.1992
(51) Int. Cl.: F24J 2/46

(54) **Solarkollektor**
Solar collector
Collecteur solaire

(30) Priorität: 17.10.1991 DE 4134394
(43) Veröffentlichungstag der Anmeldung: 21.04.1993
(73) Patentinhaber: Müller, Friedrich, D-74589 Satteldorf (DE)
(72) Erfinder: Müller, Friedrich, D-74589 Satteldorf (DE)
(74) Vertreter: von Hellfeld, Axel, Dr. Dipl.-Phys.

(56) Entgegenhaltungen:
- CH-A- 651 379
- US-A- 4 231 204
- PATENT ABSTRACTS OF JAPAN vol. 7, no. 1 (M-183)(1146) 6. Januar 1983 & JP-A-57 161 445 (NIHON KEIKINZOKU KK) 5. Oktober 1982

## Beschreibung

Die Erfindung betrifft einen Solarkollektor mit einem Gehäuse, in dem ein Sonnenenergie-Absorber unter einer abgedichtet am Gehäuse abgestützten Glasscheibe aufgenommen ist und das folgende Merkmale aufweist:
- einen Rahmen mit einer der Glasscheibe zugekehrten Wandfläche,
- ein Dichtmittel zur Verankerung der Glasscheibe am Gehäuse und zum Abdichten des Überganges von der Glasscheibe zum Gehäuse, und
- eine Rinne, die sich zumindest entlang einem Teil des Rahmens erstreckt, um Flüssigkeit zu sammeln.

Ein solcher Solarkollektor ist aus CH 651 379 A5 bekannt. Bei diesem Stand der Technik ist ein Dichtmittel aus gummiartigem Material in eine Nut gedrückt und dort mittels ankerartiger Vorsprünge, die an der Nut ausgebildete Hinterschneidungen hintergreifen, gehalten. Ein Problem tritt bei diesem Stand der Technik dadurch auf, daß der Abstand zwischen der Verankerung des Dichtmittels in der Nut bis zur Stirnkante der Glasscheibe des Kollektors relativ groß ist. Aufgrund der Abmessungstoleranz der Glasscheibe, der unterschiedlichen Wärmedehnung Zwischen dem Aluminium des Gehäuses einerseits und dem Glas andererseits (aufgrund der Wärmedehnung des Aluminiums wird der Abstand zwischen der Stirnkante des Glases und dem Rahmen des Gehäuses größer), kann es vorkommen, daß bei starkem Windsog an der Glasscheibe das Glas die Gummihalterung umknickt.

Das DE-GM 76 21 925 beschreibt einen Solarkollektor, bei dem die Abdichtung am Rand des Gehäuses mit Schaumstoff erfolgt, wobei ein Randstreifen des Rahmens mittels einer Folie am Kollektor befestigt ist.

Der Innenraum eines Solarkollektors soll möglichst vollständig gegen die äußere Atmosphäre abgedichtet sein, damit sich keine Feuchtigkeit im Innenraum des Gehäuses sammeln kann.

Im Stand der Technik wird die Glasscheibe des Sonnenkollektorgehäuses in der Regel mit Silikon oder einem Gummi gegen die metallische Gehäusewand abgedichtet. Eine Gummidichtung erfordert einen erhöhten Aufwand, weil in der Regel ein Rahmen erforderlich ist, der eine Quetschung des Gummis bewirkt.

Bei Verwendung von einspritzbarem Silikon als Dichtmittel kann auf einen solchen zusätzlichen Dichtrahmen verzichtet werden. In diesem Falle wird die Silikonmasse direkt mit dem Metallrahmen (häufig aus Aluminium) versiegelt.

Trotz der genannten Dichtmittel kommt es jedoch vor, daß Feuchtigkeit durch kleine Risse, insbesondere nach langem Gebrauch des Sonnenkollektors, in den Innenraum des Gehäuses eindringt. Derartige Feuchtigkeit kann die Glasscheibe von innen beschlagen, was den Wirkungsgrad des Sonnenenergiekollektors herabsetzt. Auch kann die Feuchtigkeit langfristig Schäden an den Bauteilen im Inneren des Gehäuses verursachen, insbesondere durch Korrosion.

Ziel der vorliegenden Erfindung ist es, einen Solarkollektor derart auszugestalten, daß mit einfachen und preisgünstigen Mitteln das Problem eindringender Feuchtigkeit gelöst ist, wobei insbesondere die Abdichtung und Halterung der Glasscheibe am Gehäuse des Kollektors sehr wirksam und stabil sein soll.

Erfindungsgemäß ist hierfür vorgesehen, daß die Glasscheibe die Rinne zumindest annähernd überbrückt und das Dichtmittel einerseits an der der Glasscheibe zugekehrten Wandfläche des Rahmens und andererseits an einer Stirnkante der Glasscheibe anliegt.

Bevorzugte Ausgestaltungen der Erfindung sind in den abhängigen Ansprüchen beschrieben.

Weitere, bevorzugte Ausgestaltungen sehen vor, daß die Außenwand des Gehäuses die Feuchtigkeit sammelnde Rinne auf einer Seite begrenzt.

Eine besonders bevorzugte Ausgestaltung der Erfindung sieht vor, daß zwischen der Außenwand des Gehäuses und der Glasscheibe ein umlaufender Freiraum vorgesehen ist zur Aufnahme eines Dichtmittels.

Die vorstehend genannte Lösung hat insbesondere den Vorteil, daß mit geringem baulichem Aufwand sowohl ein Dichtmittel, insbesondere Silikon, in einfacher Weise eingebracht werden kann und gleichwohl, wenn das Dichtmittel nicht (mehr) 100 %-ig wirksam sein sollte, eindringende Feuchtigkeit unmittelbar in die erfindungsgemäße Rinne gelangt, um von dort aus dem Inneren des Gehäuses abgeführt zu werden.

In einer weiteren Ausgestaltung der Erfindung ist vorgesehen, daß der Freiraum an seiner Oberseite offen ist, wobei das in ihm aufgenommene Dichtmittel bündig sowohl einerseits mit der Glasscheibe als auch andererseits mit der Außenwand des Gehäuses abschließt. Diese Lösung hat den Vorteil, daß die obere Fläche des Sonnenkollektor-Gehäuses insgesamt eine glatte Ebene ohne vorstehende Teile bildet und daß das Dichtmittel, bevorzugt Silikon, in einfacher Weise in den Freiraum zwischen Glas-Außenkante und Gehäusewandung eingebracht werden kann.

Eine besonders wirksame Abdichtung und ein einfaches Einbringen des Dichtmittels, z.B. Silikon, in den hierfür vorgesehenen Freiraum, ohne daß das Dichtmittel störend in die Flüssigkeitsrinne gelangen kann, wird dann erreicht, wenn die Rinne eine obere Begrenzungswand aufweist, die sich annähernd parallel zur Ebene der Glasscheibe von der Außenwand des Gehäuses abstehend nach innen erstreckt. Dabei ist es möglich, daß die Glasscheibe geringfügig höher liegt (z.B. 1 mm) als die genannte obere Begrenzungswand.

Bevorzugt ist dabei vorgesehen, daß die obere Begrenzungswand der Rinne die untere Begrenzung des Freiraumes ist und die Glasscheibe zumindest teilweise abstützt.

Eine weitere Verbesserung des Schutzes des Innenraumes des Gehäuses vor Feuchtigkeit wird gemäß einer weiteren Ausgestaltung der Erfindung dadurch erreicht, daß eine der Außenwand des Gehäuses gegenüberliegende Seitenwand der Rinne einen sich parallel zur Ebene der Glasscheibe erstreckenden Ansatz aufweist, der die Glasscheibe zumindest teilweise abstützt.

Hierdurch ist ermöglicht, daß zwischen dem Ansatz und der Glasscheibe eine weitere Dichtung angeordnet werden kann derart, daß an der besonders kritischen Außenkante der Glasscheibe eindringende Feuchtigkeit gar nicht erst in den Kollektorraum des Gehäuses gelangt, sondern unmittelbar über die erfindungsgemäße Rinne wieder aus dem Gehäuse abgeführt werden kann. Zum Abführen von Feuchtigkeit aus der Rinne in die äußere Atmosphäre sind Öffnungen in der Außenwand des Gehäuses vorgesehen.

Damit die Feuchtigkeit aus der Rinne des Gehäuses direkt auf die Außenseite von Dachziegeln überführt werden kann, ist schließlich gemäß einer weiteren bevorzugten Ausgestaltung der Erfindung vorgesehen, daß das Gehäuse unterhalb der Öffnungen ein vorstehendes Profilteil aufweist.

Nachstehend werden Ausführungsbeispiele der Erfindung anhand der Zeichnung näher erläutert. Es zeigt:
- Fig. 1: schematisch einen Schnitt durch einen Teil eines Gehäuses eines Solarkollektors,
- Fig.2: einen Schnitt durch ein anderes Ausführungsbeispiel eines Teiles eines Gehäuses eines Solarkollektors,
- Fig.3: einen Schnitt durch einen Teil des Gehäuses eines weiteren Ausführungsbeispieles eines Solarkollektors,
- Fig.4: einen Schnitt gemäß Fig.3, wobei ein Hebelarm besonders dargestellt ist, auf den es wesentlich ankommt, und
- Fig.5: einen Schnitt durch einen Teil eines Gehäuses eines weiteren Ausführungsbeispieles eines Solarkollektors.

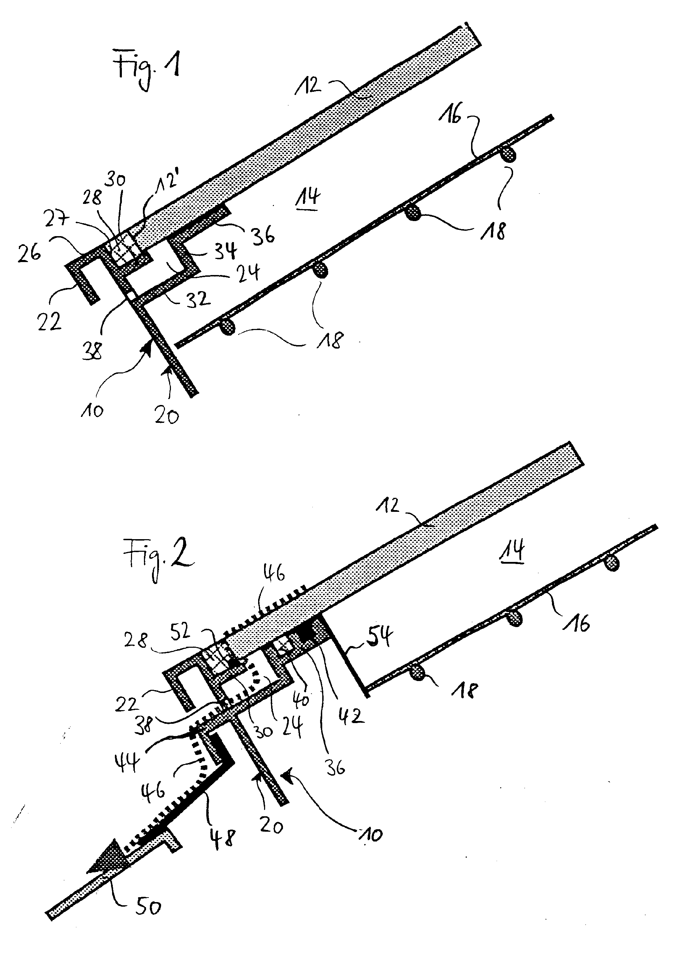

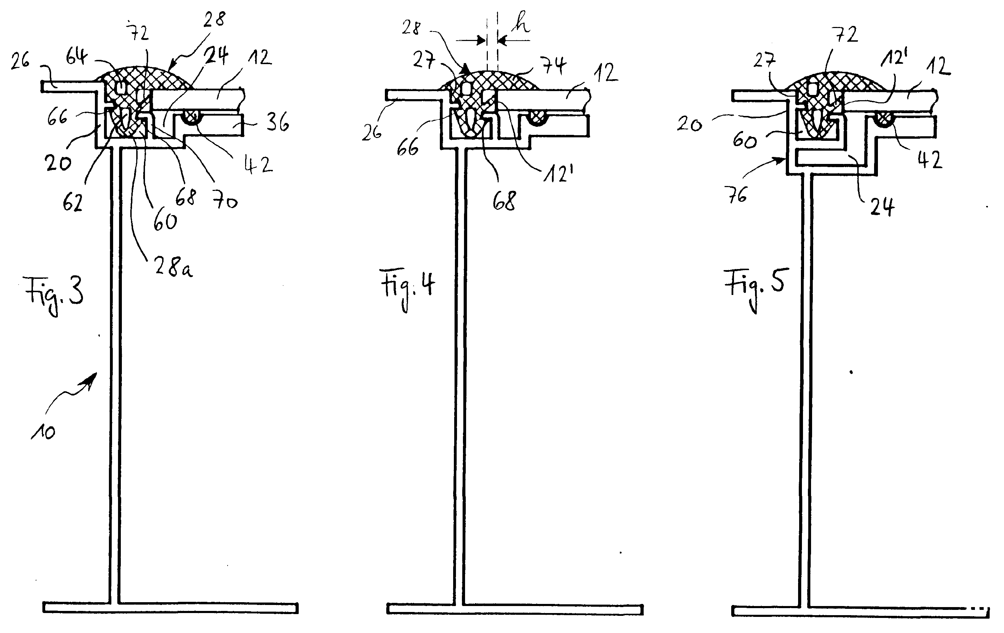

Die Fig. 1 und 2 zeigen nur einen Teil des Gehäuses, nämlich im Bereich einer Außenwandung. Es versteht sich, daß die gezeigten Schnitte durch das Gehäuse und die zugehörige Glasscheibe sowie die übrigen Bauteile des Kollektors repräsentativ sind für den gesamten umlaufenden Rand des Gehäuses.

Das Gehäuse 10 ist oben, d.h. auf seiner der Sonneneinstrahlungsrichtung zugekehrten Seite, mittels einer Glasscheibe 12 abgedichtet. Statt der Glasscheibe kann ein beliebiges für Sonnenenergie durchlässiges Material vorgesehen sein. Der Begriff "Glasscheibe" ist in diesem Sinne allgemein zu verstehen.

Der Innenraum 14 des Gehäuses soll möglichst frei von Feuchtigkeit jeder Art gehalten werden, insbesondere soll Wasser nicht eindringen können. Im Innenraum 14 des Gehäuses 10 ist ein Absorber 16 angeordnet, dessen Rohre mit dem Bezugszeichen 18 versehen sind. Dies ist alles Stand der Technik. Die Unterseite des Gehäuses ist nicht näher dargestellt, da dies ebenfalls dem Stand der Technik entspricht. Üblicherweise sind unterhalb des Kollektors 16 wärmeisolierende Materialien (nicht gezeigt) angeordnet.

Die Erfindung betrifft insbesondere die Montage der Glasscheibe derart, daß ein Eindringen von Feuchtigkeit mit hoher Sicherheit verhindert ist und dann, wenn gleichwohl Feuchtigkeit (insbesondere nach einer langen Lebensdauer des starken Witterungseinflüssen ausgesetzten Kollektors) eindringen sollte, diese möglichst unschädlich für den Betrieb und die Beständigkeit der Bauteile des Kollektors ist. Es versteht sich, daß diesbezüglich die kritische Stelle durch die Außenkante der Glasscheibe gegeben ist.

Der umlaufende Rahmen 20 des Gehäuses 10 weist eine Aufhängung 22 auf, mit der das Gehäuse mitsamt dem Kollektor an einem Dachrahmen oder an einem Aufstellgerüst befestigbar ist.

Falls trotz der nachstehend näher beschriebenen Abdichtung zwischen Glasscheibe und Gehäuse-Wandung gleichwohl Feuchtigkeit in das Innere des Gehäuse eindringt, ist eine Rinne 24 vorgesehen, mit der Feuchtigkeit gesammelt und aus dem Gehäuse heraus abgeführt werden kann.

Wesentlich für die Funktion des Gehäuses ist die geometrische Anordnung der Abdichtung der Außenkante der Glasscheibe in bezug auf das Gehäuse und die Anordnung der Rinne zum Auffangen und Abführen von Feuchtigkeit. Hierfür vorgesehene Lösungen sind in den Fig. 1 und 2 in zwei Varianten dargestellt.

Gemäß Fig. 1 ist zwischen der Außenkante der Glasscheibe 12 und der Innenwand 27 des Rahmens 20 des Gehäuses 10 ein Freiraum vorgesehen, der beim dargestellten Ausführungsbeispiel mit Silikon als Dichtmittel 28 gefüllt ist. Der Freiraum hat rechteckigen, bevorzugt viereckigen Querschnitt, wobei er auf seiner Oberseite offen ist, so daß Silikon in einfacher Weise in zunächst flüssiger Form eingebracht werden kann. Dabei ist verhindert, daß das Silikon aus dem Freiraum 28 in das Innere 14 des Gehäuses und insbesondere in die Rinne 24 gelangen kann. Hierzu erstreckt sich eine obere Begrenzungswand 30 der Rinne 24 parallel zur Ebene der Glasscheibe 12. Die obere Begrenzungswand 30 der Rinne 24 steht also nach innen vom Rahmen 20 ab. Auf diese Weise kann die Begrenzungswand 30 gleichzeitig auch als untere Begrenzung für den Freiraum 28 dienen, derart, daß mit Hilfe der Glasscheibe 12 der Freiraum 28 auch in das Innere des Gehäuses weitgehend abgedichtet ist, so daß kein Silikon nach innen dringen kann. Wie sich aus den Figuren ergibt, bildet die Außenfläche des im Freiraum 28 angeordneten Dichtmittels zusammen mit der Glasoberfläche und der Oberkante 26 der Aufhängung 22 des Gehäuses 10 eine bündige, gerade Fläche ohne vorstehende Teile. Das Silikon kann in einfacher Weise und mit guter Dichtwirkung in den Freiraum 28 eingebracht werden, wobei ein Druck auf das Silikon nicht dazu führt, daß es in schädlicher Weise in das Innere des Gehäuses gelangen kann. Nach dem Einbringen verfestigt sich das zunächst fließfähige Silikon und wird dabei elastisch.

Die untere Begrenzungswand 32 der Rinne 24 steht ebenfalls vom Rahmen 20 des Gehäuses 10 nach innen ab und erstreckt sich somit parallel zur Glasscheibe 12. An die untere Begrenzungswand 32 schließt sich eine Seitenwand 34 der Rinne 24 an, die sich parallel zum Rahmen 20 des Gehäuses erstreckt. Auf diese Weise bildet die Unterseite der Glasscheibe 12 eine direkte Begrenzung der Rinne 24. Dies hat zur Folge, daß trotz der beschriebenen Maßnahmen über die Außenkante der Glasscheibe eindringende Feuchtigkeit unmittelbar in die Rinne 24 gelangt.

An die Seitenwand 34 der Rinne 24 schließt sich integral ein Ansatz 36 an, der sich parallel zur Glasscheibe 12 erstreckt und relativ großflächig an der Unterseite der Glasscheibe 12 anliegt, um diese abzustützen.

Die Fig. 1 und 2 zeigen jeweils Gehäuse für Solarkollektoren etwa im Einbauzustand auf einem Dach oder auf einem Gerüst, d.h. die Gehäuse haben eine gewisse Neigung zur Horizontalen, so daß aufgrund der Schwerkraft Feuchtigkeit sich in der Rinne 24 in den Figuren unten links ansammeln wird. Entsprechend ist zumindest an den tiefstgelegenen Stellen des Gehäuses vorgesehen, daß der Rahmen 20 des Gehäuses Öffnungen 38 aufweist, durch welche Feuchtigkeit aus der Rinne 24 nach außen ablaufen kann. Dies ist in Fig. 2 näher dargestellt.

Fig. 2 zeigt gepunktet einen trotz der vorstehend beschriebenen Abdichtung möglicherweise auftretenden Feuchtigkeitsweg 46. Feuchtigkeit kann auf der Oberfläche der Glasscheibe 12 zwischen deren Außenkante und der Silikondichtung kriechen und auf diese Weise in die Rinne 24 gelangen. Von dort fließt sie entsprechend der Schwerkraft über die Öffnung 38 ab. Damit die Feuchtigkeit unmittelbar gemäß dem dargestellten Pfeil auf die Oberseite eines Ziegels 50 gelangen kann, ist vorgesehen, daß sich unterhalb der Öffnungen 38 an dem Rahmen 20 des Gehäuses 10 ein hakenförmiges Profilteil 44 nach außen über einen Dacheindeckrahmen 48 erstreckt. Der Dacheindeckrahmen 48 überlappt auch die Ziegel 50.

Fig. 2 zeigt gegenüber dem Ausführungsbeispiel nach Fig. 1 weitere Maßnahmen zum Schutz des Innenraumes 14 des Kollektors vor Feuchtigkeit. Zunächst sind zwischen dem oben bereits beschriebenen Ansatz 36 und der Unterseite der Glasscheibe 12 gemäß Fig. 2 zwei Dichtungen möglich, nämlich zum einen eine Silikondichtung 40 und zum anderen eine Gummidichtung 42. Diese beiden Dichtmittel sind wahlweise oder zusammen einsetzbar. Sie bewirken, daß Feuchtigkeit vom Innenraum 14 am Kollektor 16 ferngehalten wird. Eine weitere Verbesserung der Abdichtung kann dadurch erreicht werden, daß gemäß Fig. 2 eine Gummischnur 52 als Dichtung in einer unteren Ecke des Freiraumes 28 derart angeordnet wird, daß sie durch das eingebrachte Silikon zum einen gegen die Außenkante der Glasscheibe 12 und zum anderen gegen die untere Begrenzungswand 30 des Freiraumes 28 gedrückt wird, welche gleichzeitig auch die Rinne 24 oben teilweise begrenzt.

Die Glasscheibe wird bei beiden Ausführungsbeispielen (Fig.1 und 2) relativ großflächig abgestützt, nämlich auf dem Ansatz 36. Die Dichtungen 40, 42 ermöglichen eine gedämpfte Abstützung der Glasscheibe. Das Gehäuse 10 und insbesondere die Wände der Rinne 24 sind z.B. aus Aluminium, vorzugsweise integral. Dabei liegt die Glasscheibe vorzugsweise nicht auf der Begrenzungswand 30 auf. Allenfalls ein ganz geringfügiger Kontakt zwischen der Glasscheibe und der Begrenzungswand 30 ist vorgesehen.

Zu beachten ist, daß Solarkollektoren relativ hohen Temperaturschwankungen ausgesetzt sind, so daß entsprechend hohe Wärmedehnungseffekte auftreten. Solche Wärmedehnungen können das Material beanspruchen und lassen insbesondere die Dichtigkeit des Systems leiden. Die vorstehend beschriebenen Lösungen haben diesbezüglich eine Reihe von Vorteilen:

Die Glasscheibe 12 kantet an keiner Stelle gegen eine Metallfläche. Hierzu ist insbesondere vorgesehen, daß die Begrenzungswand 30 entweder leicht nach unten abgeflacht ist, damit die Glasscheibe mit ihrer Außenkante auf keinen Fall gegen den Aluminiumrahmen anstößt. Auch kann die Begrenzungswand 30 ca. 1 mm tiefer gesetzt werden als die untere Fläche der Glasscheibe 12.

Die Fertigungstoleranzen können bei den beschriebenen Lösungen relativ großzügig ausgelegt werden, da die Dichtung 52 auch bei Wärmedehnungseffekten weitgehend wirksam bleibt. Wird nämlich die Dichtung 52 aus Gummi vorgesehen, dann verbindet sich das Silikon im Freiraum 28 mit dem Gummi der Dichtung 52 und beim Aushärten des Silikons bleibt der Gummi fest an der vorgesehenen Stelle liegen, ohne daß Gefahr besteht, daß aufgrund von Wärmedehnungen Undichtigkeiten entstehen. Die Dichtung 52 kann auch beim Beispiel gemäß Fig. 1 eingesetzt werden.

Die zusätzlichen Dichtungen 40, 42 haben die Wirkung, daß der Innenraum 14 direkt über dem Kollektor 16 weitgehend luftdicht gegen die äußere Atmosphäre abgeschlossen ist.

Das Bezugszeichen 54 betrifft eine gedachte Linie, die andeutet, daß der Absorber bis dahin reicht. Zwischen dieser gedachten Linie 54 und der Außenwand 50 befindet sich üblicherweise eine Wärmedämmung. In Abwandlung der Ausführungsbeispiele gemäß den Fig. 1 und 2 ist es möglich, die Außenwand 20 auch als Doppelwand auszubilden mit einem Hohlraum zwischen zwei Außenwänden (nicht gezeigt).

Fig.3 bis 5 zeigen weitere Ausführungsbeispiele eines Solarkollektors, die bevorzugt auch mit der Lösung gemäß den Fig.1 und 2 kombinierbar sind (siehe unten).

Bei den Ausführungsbeispielen gemäß den Fig.3 bis 5 dient zur Befestigung und Abdichtung der Glasscheibe 12 in bezug auf den Rahmen 20 des Gehäuses 10 ein Dichtmittel 28, das hier bevorzugt aus gummiartigem Material besteht, das bereits beim Einbringen und Befestigen an den Rahmen einen gummiähnlichen Zustand hat (also nicht fließfähig ist). Ansonsten sind in den Fig.1 bis 5 einander entsprechende Bauteile mit gleichen Bezugszeichen versehen.

Das Dichtmittel 28 gemäß den Fig.3 bis 5 dient einerseits zur Abdichtung des Übergangs von der Glasscheibe 12 zum Rahmen 20 des Gehäuses 10 und gleichzeitig auch zur Befestigung der Glasscheibe 12 in bezug auf das Gehäuse 10. Hierzu ist das Dichtmittel 28 gemäß den Fig.3 bis 5 einerseits am Gehäuse 10 fest verankert, wie weiter unten näher beschrieben ist, und andererseits überragt ein Kopf des Dichtmittels 28 die Glasscheibe 12, um diese in bezug auf das Gehäuse 10 nach unten (in den Fig.3 bis 5 gesehen) zu drücken.

Zur Befestigung des Dichtmittels 28 am Gehäuse 10 ist am umlaufenden Rahmen 20 des Gehäuses eine Nut 60 ausgebildet, in die gemäß Fig.3 ein Ankerteil 28a des Dichtmittels 28 so eingreift, daß eine stabile Verankerung gegeben ist.

Im Dichtmittel 28 sind Hohlräume 62, 64 ausgebildet.

Am Ankerteil 28a des Dichtmittels 28 sind Vorsprünge 66 und 68 ausgebildet, wobei in bezug auf die Nut der in den Fig.3 bis 5 links gezeigte Vorsprung 66 höher liegt als der rechts gezeigte Vorsprung 68. Dies hat zur Folge, daß das Verankerungsteil 28a leichter in die Nut 60 drückbar ist. Im eingebauten Zustand des Dichtmittels 28 greifen die Vorsprünge 66, 68 hinter entsprechende Vorsprünge, die am Rahmen 20 bzw. einem mit dem Rahmen fest verbundenen Steg 70 ausgebildet sind (in den Figuren ohne Bezugszeichen). Gemäß den Fig.3 bis 5 überbrückt die Glasscheibe 12 im wesentlichen die flüssigkeitssammelnde Rinne 24 und reicht zumindest annähernd bis zur Oberkante des Steges 70. Die Stirnkante 12′ (vgl. Fig.4 und 5) kann dabei durchaus gegen das gummiartige Dichtmittel 28 stoßen, da unterschiedliche Wärmedehnungen durch das Dichtmittel ausgeglichen werden. Die Breite der Oberkante des Steges 70 kann sehr kurz gehalten werden, z.B. bei 2,5 mm. Dies bedeutet, daß der Hebel h (Fig.4) zwischen dem Anker 68 des Dichtmittels 28 und der Stirnkante 12′ der Glasscheibe 12 relativ kurz ist (anders als beim oben genannten Stand der Technik), z.B. kleiner als 1 mm. Dies bewirkt eine sichere Niederhaltung der Glasscheibe 12 durch das Dichtmittel 28 auch bei starken Sogkräften an der Glasscheibe 12.

Wie in den Fig.3 bis 5 dargestellt ist, weist das Dichtmittel 28 im Bereich der Innenwand 27 des Rahmens 20 einen Abschnitt auf, der satt an der Innenwand anliegt. Dies hat folgenden Vorteil: wenn die Glasscheibe 12 durch starken Windsog in den Figuren nach oben gezogen wird, dann ist die Glasscheibe 12 bestrebt, den Kopf 74 des Dichtmittels 28 in dem Bereich, der die Glasscheibe überlappt, nach oben aufzuklappen. Dabei entstehen gleichzeitig Verschiebekräfte im Dichtmittel 28 nach außen, d.h. in den Fig.3 bis 5 nach links. Um ein Aufklappen des Gummis bei Windsog zu vermeiden, ist die oben genannte satte Anlage des Dichtmittels 28 an die Wandung 27 des Rahmens 20 vorgesehen, so daß das Aufklappen erschwert ist und die Glasscheibe 12 zuverlässig niedergehalten bleibt. Das gummiartige Dichtmittel 28 stabilisiert sich selbst.

Am Dichtmittel 28 ist gemäß den Fig.3 bis 5 eine Lippe 72 ausgebildet, die an der Stirnkante 12′ der Glasscheibe 12 anliegt. Dies hat folgende Vorteile: aufgrund der Herstellungstoleranzen, der Wärmedehnung etc. hat die Glasscheibe 12 in bezug auf das Dichtmittel 28 immer einen gewissen Abstand, der bei der vorliegenden Erfindung zwar wesentlich geringer ist als beim oben genannten Stand der Technik, jedoch kaum zu vermeiden ist. Damit nun die Glasscheibe 12 nicht auf eine Seite des Kollektors rutscht und damit den Abstand auf der anderen Seite automatisch vergrößert, weist das Dichtmittel 28 die Lippe 72 auf, die das Glas in einem rundum gleichmäßigen Abstand zum Gummi des Dichtmittels 28 hält.

Die Dichtlippe 72 hat einen weiteren Vorteil: drückt die Glasscheibe mit der Stirnkante 12′ gegen die Lippe, so wird diese an ihrer oberen Seite zum Gummikörper des Dichtmittels gedrückt, was gleichzeitig bewirkt, daß der Vorsprung 68 am Verankerungsteil 28a des Dichtmittels in die entgegengesetzte Richtung gedrückt wird, also in den Fig.3 bis 5 nach rechts. Auf diese Weise wird die Verankerung mittels des Vorsprunges 68 gefördert (stabilisiert). Hierzu hat die Dichtlippe 72 die in den Figuren angegebenen Form in bezug auf das Dichtmittel 28, nämlich von unten nach oben und von außen nach innen (wobei sich die Begriffe unten, oben, außen und innen auf die Funktion des Solarkollektors in bezug auf die Sonne beziehen). Die beiden in den Fig.1 und 2 einerseits und in den Fig.3 bis 5 andererseits beschriebenen Ausführungsbeispiele von Dichtmitteln können in günstiger Weise wie folgt kombiniert werden:

Es ist möglich, den Solarkollektor an beiden Seiten sowie oben (gemeint ist der Einbauzustand in schrägem Zustand auf einem Dach) mit einem Dichtmittel 28 gemäß den Fig.3 bis 5 zu versehen. Dies bedeutet, daß das Dichtmittel 28 mit dem Kopf 74 geringfügig über die Glasscheibe 12 vorsteht.

Auf der unteren Seite des Kollektors hingegen, dort wo Wasser abläuft und Schnee abrutschen soll, wird der Kollektor mit einer Silikondichtung 28 gemäß den Fig.1 bis 2 versehen, so daß ein ebener, bündiger Abschluß zwischen der Glasscheibe 12 und dem Rahmen 20 gegeben ist. Dies bewirkt, daß das Silikon, das sich ja mit der Glasscheibe und dem Kollektorrahmen verklebt, eine zusätzliche Fixierung der Glasscheibe erzeugt. Besonders beim Transport wird die Glasscheibe so zusätzlich gegen ein Verrutschen gesichert. Weiterhin ist die Silikonabdichtung gemäß den Fig.1 und 2 wesentlich flacher als das Gummiprofil gemäß den Fig.3 bis 5, so daß Schnee besser abrutschen kann. Besonders beim Abrutschen von Hartschnee oder Eisresten ist diese Lösung von Vorteil, da kein vorstehendes Gummiteil aufgerissen oder aufgebogen werden kann.

Eine weitere Ausgestaltung des Dichtmittels 28 gemäß den Fig.3 bis 5 sieht vor, daß die Hohlräume 62, 64 in besonderer Weise genutzt werden. Diese Hohlräume dienen nicht nur zur Einsparung von Masse, sie können auch in vorteilhafter Weise zur Förderung der Verankerung des Dichtmittels 28 in bezug auf das Gehäuse 10 verwendet werden.

So ist es möglich, in zumindest einen der Hohlräume eine flüssige oder leicht teigige Masse einzuspritzen, die sich anschließend aushärtet und dabei ihr Volumen vergrößert, so daß das Dichtmittel 28 zuverlässig und fest in der Nut 60 verankert wird. Eine solche Flüssigkeit kann z.B. PU-Schaum sein. Dabei würde nicht nur das Dichtmittel 28 besonders stabil in der Nut 60 befestigt werden, es wäre auch gleichzeitig bewirkt, daß der Kopf 74 noch wesentlich kräftiger auf die Glasscheibe 12 drückt, um diese nach unten zu sichern, beispielsweise gegen die elastische Dichtung 42.

Eine ähnliche Wirkung läßt sich auch dadurch erreichen, daß in die Hohlräume 62 und/oder 64 ein fester Körper eingeschoben wird, der das Gummi in den Figuren links und rechts an den Rahmen 20 (beispielsweise aus Aluminium) anpreßt.

Die vorstehend beschriebene Einbringung eines aushärtenden, sich ausdehnenden Materials bzw. eines festen Körpers in die Hohlräume kann sowohl durchgängig über eine gesamte Seite des Kollektors erfolgen als auch nur stückweise.

Beim Ausführungsbeispiel gemäß Fig.5 ist die Rinne 24 bis unter die Nut 60 gezogen und reicht bis zur Außenwand des Rahmens 20. Ein Loch (bzw. Löcher) kann dann an der mit 76 bezeichneten Stelle in der Außenwand angebracht werden, damit Flüssigkeit ablaufen kann (an der Unterseite des Kollektors). Somit braucht hier nur ein einziges Loch für die Rinne 24 gebohrt zu werden.

## Patentansprüche

1. Solarkollektor mit einem Gehäuse (10), in dem ein Sonnenenergie-Absorber (16) unter einer abgedichtet am Gehäuse (10) abgestützten Glasscheibe (12) aufgenommen ist und der folgende Merkmale aufweist:
- einen Rahmen (20) mit einer der Glasscheibe (12) zugekehrten Wandfläche (27),
- ein Dichtmittel (28) zur Verankerung der Glasscheibe (12) am Gehäuse und zum Abdichten des Überganges von der Glasscheibe (12) zum Gehäuse (10), und
- eine Rinne (24), die sich zumindest entlang einem Teil des Rahmens (20) erstreckt, um Flüssigkeit zu sammeln,
dadurch **gekennzeichnet**, daß
- die Glasscheibe (12) die Rinne (24) zumindest annähernd überbrückt und
- das Dichtmittel (28) einerseits an der der Glasscheibe (12) zugekehrten Wandfläche (27) des Rahmens (20) und andererseits an einer Stirnkante (12′) der Glasscheibe (12) anliegt.

2. Solarkollektor nach Anspruch 1,
dadurch **gekennzeichnet**, daß das Dichtmittel (28) aus einem elastischen Material besteht und mittels zumindest zweier am Dichtmittel (28) ausgeformter, ankerartiger Vorsprünge (66, 68) Hinterschneidungen an einer Nut (60) hintergreift, die am Rahmen (20) bzw. mit diesem verbundenen Teilen (70) ausgebildet sind, und daß das Dichtmittel (28) sich über einen Teil der Glasscheibe (12) erstreckt.

3. Solarkollektor nach Anspruch 2,
dadurch **gekennzeichnet**, daß die Glasscheibe (12) sich zumindest annähernd bis zu einer inneren Wand (70) der Nut (60) erstreckt.

4. Solarkollektor nach einem der vorhergehenden Ansprüche,
dadurch **gekennzeichnet**, daß das Dichtmittel (28) eine elastische Lippe (72) aufweist, die sich an der Stirnkante (12′) der Glasscheibe (12) abstützt.

5. Solarkollektor nach einem der Ansprüche 2-4,
dadurch **gekennzeichnet**, daß sich die Rinne (24) zumindest teilweise unterhalb der Nut (60) bis zur Außenwand des Rahmens (20) erstreckt.

6. Solarkollektor nach Anspruch 2,
dadurch **gekennzeichnet**, daß die Hinterschneidungen, hinter welche die ankerartigen Vorsprünge des Dichtmittels (28) greifen, in unterschiedlichen Tiefen der Nut (60) angeordnet sind.

7. Solarkollektor nach einem der vorhergehenden Ansprüche,
dadurch **gekennzeichnet**, daß das Dichtmittel (28) einen oder mehrere Hohlräume (62, 64) aufweist.

8. Solarkollektor nach Anspruch 7,
dadurch **gekennzeichnet**, daß Mittel zum Einführen in zumindest einen der Hohlräume (62, 64) vorgesehen sind, um die Verankerung des Dichtmittels (28) in der Nut (60) zu fördern.

9. Solarkollektor nach Anspruch 1,
dadurch **gekennzeichnet**, daß als Dichtmittel (28) ein einspritzbares, sich nach dem Einspritzen in einen elastischen Zustand verfestigendes Material, wie Silikon, vorgesehen ist.

10. Solarkollektor nach den Ansprüchen 2 und 9,
dadurch **gekennzeichnet**, daß an zumindest einer Seite des Kollektors die Glasscheibe (12) mittels eines einspritzbaren, sich nach dem Einspritzen in einen elastischen Zustand verfestigenden Materials als Dichtmittel (28) am Gehäuse (10) abgestützt ist, während an den anderen Seiten des Kollektors die Abstützung der Glasscheibe (12) am Gehäuse (10) mittels eines schon beim Einbringen in die Nut (60) elastischen, gummiartigen Materials als Dichtmittel (28) erfolgt.

## Claims

1. A solar collector, comprising a housing (10) in which a solar energy absorber (16) is received under a glass pane (12) supported in sealed fashion at the housing (10), the collector comprising the following features:
- a frame (20) having a wall surface (27) which faces the glass pane (12),
- a sealing means (28) for anchoring the glass pane (12) at the housing and for sealing the transition from the glass pane (12) to the housing (10), and
- a channel (24) extending at least along part of the frame (20) to collect liquid,
**characterized** in that
- the glass pane (12) at least approximately bridges the channel (24), and
- the sealing means (28), one the one hand, rests against the frame (20) wall surface (27) facing the glass pane (12) and, on the other hand, against a front edge (12′) of the glass pane (12).

2. The solar collector as claimed in claim 1, characterized in that the sealing means (28) is made of an elastic material and formed with at least two anchor-like projections (66, 68) by which it engages behind undercuts at a groove (60) which are provided at the frame (20) and at parts (70) connected to the same, respectively, and that the sealing means (28) extends over part of the glass pane (12).

3. The solar collector as claimed in claim 2, characterized in that the glass pane (12) extends at least approximately up to an inner wall (70) of the groove (60).

4. The solar collector as claimed in any one of the preceding claims, characterized in that the sealing means (28) comprises an elastic lip (72) which rests against the front edge (12′) of the glass pane (12).

5. The solar collector as claimed in any one of claims 2 to 4, characterized in that the channel (24) extends at least in part below the groove (60) up to the outer wall of the frame (20).

6. The solar collector as claimed in claim 2, characterized in that the undercuts which are engaged from behind by the anchor-like projections of the sealing means (28) are located at different depths of the groove (60).

7. The solar collector as claimed in any one of the preceding claims, characterized in that the sealing means (28) includes one or more cavities (62, 64).

8. The solar collector as claimed in claim 7, characterized in that means are provided to be introduced into at least one of the cavities (62, 64) to promote the anchoring of the sealing means (28) in the groove (60).

9. The solar collector as claimed in claim 1, characterized in that a material which is suitable for injection and solidifies into an elastic state upon injection, such as silicone, is provided as the sealing means (28).

10. The solar collector as claimed in claims 2 and 9, characterized in that, at least at one side of the collector, the glass pane (12) is supported on the housing (10) by means of a material which is capable of being injected and, upon injection, solidifies into an elastic state to serve as the sealing means (28), while the glass pane (12) is supported on the housing (10) by means of a rubber-like material which already is elastic upon introduction into the groove (60), serving as the sealing means (28) at the other sides of the collector.

## Revendications

1. Capteur solaire comprenant un coffre (10) dans lequel un absorbeur (16) d'énergie solaire est reçu sous une vitre (12) supportée étanche sur le coffre (10) et qui présente les particularités suivantes:
- le coffre est pourvu d'un encadrement (20) possédant une face de paroi (27) dirigée vers la vitre (12),
- un milieu d'étanchéité (28) est prévu pour ancrer la vitre (12) sur le coffre et pour étancher la transition de la vitre (12) au coffre (10) et
- une gouttière (24) s'étend le long d'une partie au moins de l'encadrement (20) pour recueillir du liquide,
caractérisé en ce que
- la vitre (12) couvre la gouttière (24) au moins à peu près et
- le milieu d'étanchéité (28) s'applique d'une part contre la face de paroi (27) de l'encadrement (20) dirigée vers la vitre (12) et d'autre part contre la tranche (12′) de la vitre (12).

2. Capteur solaire selon la revendication 1, caractérisé en ce que le milieu d'étanchéité (28) est fait d'un matériau élastique et s'accroche, au moyen d'au moins deux saillies (66, 68) formées sur le milieu d'étanchéité (28) et semblables à des parties d'ancrage, derrière des épaulements délimitant des élargissements d'une rainure (60) et formés sur l'encadrement (20) ou des parties reliées à celui-ci, et que le milieu d'étanchéité (28) s'étend sur une partie de la vitre (12).

3. Capteur solaire selon la revendication 3, caractérisé en ce que la vitre (12) s'étend au moins à peu près jusqu'à une paroi intérieure (70) de la rainure (60).

4. Capteur solaire selon une des revendications précédentes, caractérisé en ce que le milieu d'étanchéité (28) présente une lèvre élastique (72) qui s'appuie sur la tranche (12′) de la vitre (12).

5. Capteur solaire selon une des revendications 2 - 4, caractérisé en ce que la gouttière (24) s'étend au moins partiellement sous la rainure (60) jusqu'à la paroi extérieure de l'encadrement (20).

6. Capteur solaire selon la revendication 2, caractérisé en ce que les épaulements délimitant les élargissements et derrière lesquels s'accrochent les saillies semblables à des parties d'ancrage du milieu d'étanchéité (28), sont disposés à des profondeurs différentes de la rainure (60).

7. Capteur solaire selon une des revendications précédentes, caractérisé en ce que le milieu d'étanchéité (28) présente une ou plusieurs cavités (62, 64).

8. Capteur solaire selon la revendication 7, caractérisé en ce que des moyens à introduire dans au moins l'une des cavités (62, 64) sont prévus afin de favoriser l'ancrage du milieu d'étanchéité (28) dans la rainure (60).

9. Capteur solaire selon la revendication 1, caractérisé en ce qu'un matériau injectable, se solidifiant après l'injection en un état élastique, tel que le silicone, est prévu en tant que milieu d'étanchéité (28).

10. Capteur solaire selon les revendications 2 et 9, caractérisé en ce que, sur au moins un côté du capteur, la vitre (12) est supportée sur le coffre (10) au moyen d'un matériau injectable, se solidifiant après l'injection en un état élastique, en tant que milieu d'étanchéité (28), tandis que le support de la vitre (12) au coffre (12) sur les autres côtés du capteur s'effectue au moyen d'un matériau caoutchouteux en tant que milieu d'étanchéité (28), matériau qui est déjà élastique à la mise en place dans la rainure (60).
